# EUROPEAN PATENT APPLICATION

(11) **EP 4 817 981 A1**
(43) Date of publication of application: **07.10.2026**
(21) Application number: 25864853.4
(22) Date of filing: 26.05.2025
(51) Int. Cl.: B60W 30/18, B60W 30/182, B60W 30/12, B60W 30/095, B60W 40/08

(54) **VEHICLE CONTROL METHOD AND APPARATUS, ELECTRONIC DEVICE AND ENGINEERING VEHICLE**

(30) Priority: 10.09.2024 CN 202411266325
(71) Applicant: Sany Special Purpose Vehicle Co., Ltd., Hunan 422000 (CN)
(72) Inventor: FANG, Yixuan, Shaoyang, Hunan 422000 (CN); HU, Xiangping, Shaoyang, Hunan 422000 (CN); WANG, Wei, Shaoyang, Hunan 422000 (CN)
(74) Representative: Murgitroyd & Company
(86) International application number: PCT/CN2025/097119
(87) International publication number: WO 2026/056350

(57) **Abstract**

The present application provides a vehicle control method, an apparatus, an electronic device, and an engineering vehicle. By acquiring in real time a driving state, environmental information, and a traffic condition of the vehicle, determining a driving condition of the vehicle at a current moment, that is, a current driving condition of the vehicle based on the driving state, the environmental information, and the traffic condition, and controlling the vehicle to travel in a target driving mode, that is, a driving mode corresponding to the current driving condition, intelligent decision-making and control of the vehicle are achieved for changes in the driving condition of the vehicle, and the vehicle is controlled to travel in the driving mode corresponding to the driving condition, thereby ensuring that the vehicle may operate safely and efficiently in various scenarios or operating conditions.

## Description

### CROSS-REFERENCE TO RELATED APPLICATIONS

This application claims priority to Chinese Patent Application No. 202411266325.4, filed with the China National Intellectual Property Administration on September 10, 2024, and titled "CONTROL METHOD AND APPARATUS OF THE VEHICLE, ELECTRONIC DEVICE, AND ENGINEERING VEHICLE". The disclosure of the aforementioned application is hereby incorporated by reference in its entirety.

### TECHNICAL FIELD

The present application relates to the field of vehicle technologies, and in particular, to a control method and an apparatus of a vehicle, an electronic device, and an engineering vehicle.

### BACKGROUND

In a modern transportation system, an important engineering vehicle such as a mixer truck is widely used in various aspects of construction sites and urban construction.

In the related art, a lane keeping assist system and a collision avoidance system mainly rely on sensors such as a camera, a radar, and a lidar to achieve automatic control of a vehicle through image processing and signal analysis. However, due to characteristics of the mixer truck, such as a high body structure, large center-of-mass offset, and unstable loading, and because a working environment of the mixer truck is complex and changeable, for example, the working environment of the mixer truck may be a narrow urban street, a rough construction site road, or a wet and slippery road with a low adhesion coefficient, performance of a vehicle stability assist system and the collision avoidance system is greatly affected. For example, it is difficult for the vehicle stability assist system to accurately identify a lane line and keep the vehicle driving stably, and the collision avoidance system has insufficient reaction speed and accuracy when facing a sudden obstacle, making it difficult to ensure safety of the vehicle and pedestrians.

Therefore, how to achieve safe and stable driving of engineering vehicles such as a mixer truck in a complex operating condition has become an urgent problem to be solved.

### SUMMARY

Based on defects and shortcomings of the above related art, the present application proposes a control method and an apparatus of a vehicle, an intelligent cockpit, and a vehicle, which may determine a current driving condition of the vehicle based on a driving state, environmental information, and a traffic condition of the vehicle, and control the vehicle to travel in a driving mode corresponding to the driving condition, thereby realizing intelligent decision-making and control of the vehicle, and ensuring that the vehicle may operate safely and efficiently in various operating conditions.

According to a first aspect of embodiments of the present application, a control method of a vehicle is provided, including:
acquiring, in real time, a driving state, environmental information, and a traffic condition of the vehicle;
determining a current driving condition of the vehicle based on the driving state, the environmental information, and the traffic condition, where the current driving condition is a driving condition at a current moment; and
controlling the vehicle to travel in a target driving mode, where the target driving mode is a driving mode corresponding to the current driving condition.

According to a second aspect of the embodiments of the present application, a control apparatus of a vehicle is provided, including:
an acquisition module, configured to acquire, in real time, a driving state, environmental information, and a traffic condition of the vehicle;
a determination module, configured to determine a current driving condition of the vehicle based on the driving state, the environmental information, and the traffic condition, where the current driving condition is a driving condition at a current moment; and
a control module, configured to control the vehicle to travel in a target driving mode, where the target driving mode is a driving mode corresponding to the current driving condition.

According to a third aspect of the embodiments of the present application, an electronic device is provided, including a memory and a processor;
where the memory is connected to the processor and is configured to store a program; and
the processor is configured to implement the control method of the vehicle according to the first aspect by executing the program in the memory.

According to a fourth aspect of the embodiments of the present application, a storage medium is provided, where the storage medium stores a computer program, and when the computer program is executed by a processor, the control method of the vehicle according to the first aspect is implemented.

According to a fifth aspect of the embodiments of the present application, an engineering vehicle is provided, where the engineering vehicle is equipped with the control apparatus of the vehicle according to the second aspect, or the electronic device according to the third aspect.

According to a sixth aspect of the embodiments of the present application, the present application also provides a computer program product, including a computer program, when the computer program is executed by a processor, the control method of the vehicle according to the first aspect is implemented.

According to a seventh aspect of the embodiments of the present application, the present application also provides a computer program, when the computer program is executed by a processor, the control method for vehicle according to the first aspect is implemented.

In the above control method and apparatus of the vehicle, electronic device, and engineering vehicle, the driving state, the environmental information, and the traffic condition of the vehicle may be acquired in real time. Based on the driving state, the environmental information, and the traffic condition, the driving condition of the vehicle at the current moment, that is, the current driving condition of the vehicle, may be determined, and the vehicle is controlled to travel in the target driving mode, that is, the driving mode corresponding to the current driving condition. Thus, in response to changes in the driving condition of the vehicle, the vehicle is controlled to travel in the driving mode corresponding to the driving condition, thereby realizing intelligent decision-making and control of the vehicle, and ensuring that the vehicle may operate safely and efficiently in various scenarios or operating conditions.

### BRIEF DESCRIPTION OF THE DRAWINGS

To more clearly illustrate the embodiments of the present application or technical solutions in the related art, drawings required for describing the embodiments or the related art are briefly introduced below. Apparently, the drawings in following description are merely some embodiments of the present application. For those with ordinary skill in the art, other drawings may be obtained based on provided drawings without creative effort.
FIG. 1 is a schematic flowchart of a control method of a vehicle provided by an embodiment of the present application.
FIG. 2 is a schematic diagram of a vehicle control flow provided by an embodiment of the present application.
FIG. 3 is a schematic structural diagram of a control apparatus of a vehicle provided by an embodiment of the present application.
FIG. 4 is a schematic structural diagram of an electronic device provided by an embodiment of the present application.

### DETAILED DESCRIPTION OF THE EMBODIMENTS

Technical solutions in the embodiments of the present application are clearly and completely described below with reference to the drawings of the embodiments of the present application. Obviously, the described embodiments are merely a portion of the embodiments of the present application, not all of the embodiments. Based on the embodiments in the present application, all other embodiments obtained by a person with ordinary skill in the art without creative work fall within the protection scope of the present application.

In the embodiments of the present application, a term "and/or" is used for describing an association relationship between associated objects, indicating that three relationships may exist. For example, A and/or B may indicate: only A exists, both A and B exist, and only B exists. A character "/" generally indicates that the associated objects before and after are in an "or" relationship.

In the embodiments of the present application, a term "a plurality of" means two or more, and other quantifiers are similar thereto.

The technical solutions in the embodiments of the present application are clearly and completely described below with reference to the drawings of the embodiments of the present application. Obviously, the described embodiments are merely a portion of the embodiments of the present application, not all of the embodiments. Based on the embodiments in the present application, all other embodiments obtained by a person with ordinary skill in the art without creative work fall within the protection scope of the present application.

In the related art, a lane keeping assist system and a collision avoidance system mainly rely on sensors such as a camera, a radar, and a lidar to achieve automatic control of a vehicle through image processing and signal analysis. However, due to characteristics of a mixer truck, such as a high body structure, large center-of-mass offset, and unstable loading, and because a working environment of the mixer truck is complex and changeable, for example, the working environment of the mixer truck may be a narrow city street, a rough construction site road, or a wet and slippery road with a low adhesion coefficient, performance of a vehicle stability assist system and the collision avoidance system is greatly affected. For example, it is difficult for the vehicle stability assist system to accurately identify a lane line and keep the vehicle driving stably, and the collision avoidance system has insufficient reaction speed and accuracy when facing a sudden obstacle, making it difficult to ensure safety of the vehicle and pedestrians. Therefore, how to achieve safe and stable driving of an engineering vehicle such as a mixer truck in a complex operating condition has become an urgent problem to be solved.

On this basis, through further research, it has been found that by acquiring, in real time, a driving state, environmental information, and a traffic condition of the vehicle; based on the driving state, the environmental information, and the traffic condition, determining a driving condition of the vehicle at a current moment, that is, a current driving condition of the vehicle; and controlling the vehicle to travel in a target driving mode, that is, a driving mode corresponding to the current driving condition, so that, in response to changes in the driving condition of the vehicle, the vehicle is controlled to travel in the driving mode corresponding to the driving condition, thereby realizing intelligent decision-making and control of the vehicle, and ensuring that the vehicle may operate safely and efficiently in various scenarios or operating conditions.

Based on the above concept, the embodiments of the present application provide a control method and an apparatus of a vehicle. The control method of the vehicle is exemplarily described below with reference to the drawings.

Among them, the method and the apparatus are based on a same inventive concept. Since a principle of solving problems by the method and the apparatus is similar, implementation of the apparatus and the method may refer to each other, and repeated descriptions are not described again.

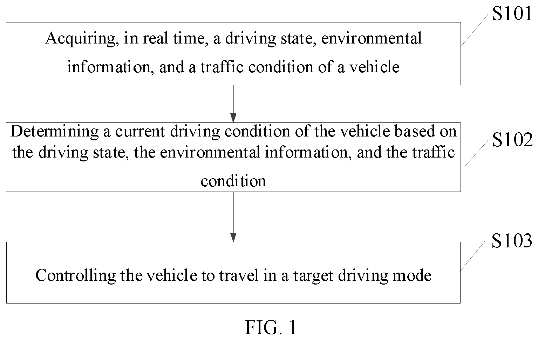

With reference to FIG. 1, FIG. 1 is a schematic flowchart of a control method of a vehicle provided by an embodiment of the present application. As shown in FIG. 1, the control method of the vehicle includes steps S101 to S103:
S101: acquiring, in real time, the driving state, the environmental information, and the traffic condition of the vehicle.

By means of a camera, a millimeter-wave radar, a lidar, an ultrasonic sensor, and the like installed on the vehicle, multimodal data, that is, data of the vehicle and its surrounding environment, is acquired.

Among them, the camera is used for collecting image information of the lane line and an obstacle ahead, the millimeter-wave radar and lidar are used for detecting dynamic and static obstacles in front of, behind, and on the sides of the vehicle, and the ultrasonic sensor is used for close-range obstacle detection. Multimodal data refers to a plurality of types of data, including images, voice, video, and the like.

Thereafter, data fusion processing is performed on acquired multimodal data to obtain multimodal fusion information, that is, the driving state, the environmental information, and the traffic condition of the vehicle.

Specifically, the camera, millimeter-wave radar, lidar, ultrasonic sensor, and the like are connected to a central processing unit via a data bus. The central processing unit processes data from each sensor through a data fusion algorithm to generate high-precision environmental perception information, including the environmental information and the traffic condition.

Among them, the data fusion algorithm may be a multimodal information fusion algorithm based on deep learning.

The central processing unit uses a modal information fusion algorithm to process, in real time, data acquired by the camera, radar, ultrasonic sensor, and the like, so as to obtain the driving state, the environmental information, and the traffic condition of the vehicle.

It may be understood that, by adopting multi-sensor fusion technology, comprehensively using the camera, millimeter-wave radar, lidar, and ultrasonic sensor for data acquisition, and through data fusion and multi-sensor calibration, high-precision perception information may be generated, effectively improving accuracy and robustness of vehicle state and surrounding environment perception.

S102: determining the current driving condition of the vehicle based on the driving state, the environmental information, and the traffic condition.

The current driving condition of the vehicle is the driving condition of the vehicle at the current moment.

Based on the driving state, the environmental information, and the traffic condition, the driving condition is judged by an operating condition classifier to determine the current driving condition of the vehicle.

The operating condition classifier may be a model based on a convolutional neural network and a Transformer. Multimodal fusion information, that is, the driving state, the environmental information, and the traffic condition, is input into the model. After processing input, the model outputs a driving condition recognition result, thereby obtaining the current driving condition of the vehicle.

Exemplarily, the driving conditions of the vehicle include a highway driving condition, an urban road driving condition, and a construction site operating condition.

Based on different actual operating situations, the driving condition of the vehicle may be divided more finely or coarsely, and in this case, the vehicle has more or fewer types of driving conditions.

S103: controlling the vehicle to travel in the target driving mode.

The target driving mode is the driving mode corresponding to the current driving condition.

Exemplarily, the driving modes of the vehicle include a highway driving mode, an urban road driving mode, and a construction site operating mode. Among them, the highway driving condition corresponds to the highway driving mode, the urban road driving condition corresponds to the urban road driving mode, and the construction site operating condition corresponds to the construction site operating mode.

If the target driving mode, that is, the driving mode corresponding to the current driving condition of the vehicle, is different from the current driving mode of the vehicle, the driving mode of the vehicle is controlled to switch from the current driving mode to the target driving mode; and if the target driving mode is the same as the current driving mode of the vehicle, the vehicle is controlled to continue to travel in the current driving mode.

Since the driving mode of the vehicle is determined by the driving condition, when the driving condition of the vehicle changes, the driving mode of the vehicle should also change accordingly, so as to ensure that the vehicle adapts to the current driving condition and travels in an appropriate driving mode. Therefore, switching of the driving mode of the vehicle may be controlled based on whether the driving condition of the vehicle changes.

Specifically, it is determined whether the current driving condition changes relative to a historical driving condition, and the driving mode of the vehicle is controlled based on whether change occurs.

The historical driving condition is a driving condition of the vehicle at a previous moment immediately preceding the current moment.

The previous moment immediately preceding the current moment is a moment that is before the current moment and adjacent to the current moment.

Exemplarily, if the current moment is time t, then the previous moment immediately preceding the current moment is time t-1.

It should be noted that a moment refers to a point in time, which is a specific instant in time, usually represented by a specific numerical value, for example, in seconds. Exemplarily, when a moment is expressed in seconds, if the current moment is 23:57:11 on September 4, 2023, then the previous moment immediately preceding the current moment is 23:57:10 on September 4, 2023.

If yes, that is, the current driving condition changes relative to the historical driving condition, then the driving mode of the vehicle is switched to the target driving mode, and the vehicle is controlled to travel in this target driving mode.

Correspondingly, if no, that is, the current driving condition does not change relative to the historical driving condition, then the vehicle is controlled to continue to travel in the current driving mode, that is, the target driving mode.

It may be understood that in different driving modes, a driving strategy and a control algorithm of the vehicle may be different. In this way, based on different driving conditions of the vehicle, by switching the driving mode of the vehicle, the control algorithm for controlling the vehicle during driving may be automatically adjusted.

In this embodiment, the driving state, the environmental information, and the traffic condition of the vehicle are acquired in real time; based on the driving state, the environmental information, and the traffic condition, the driving condition of the vehicle at the current moment, that is, the current driving condition of the vehicle is determined; and the vehicle is controlled to travel in the target driving mode, that is, the driving mode corresponding to the current driving condition. Thereby, in response to changes in the driving condition of the vehicle, the vehicle is controlled to travel in the driving mode corresponding to the driving condition, so that intelligent decision-making and control of the vehicle are achieved, and the vehicle is ensured to operate safely and efficiently in various scenarios or operating conditions.

Autonomous driving of the vehicle may be implemented by adopting a modular design, related functions of the autonomous driving, such as lane keeping, collision avoidance, path planning, and the like, are divided into different independent functional modules. To better adapt to changes in the driving condition of the vehicle and enable the vehicle to operate safely and efficiently in various operating conditions, in some embodiments, when the driving mode is adjusted, execution strategy of each functional module is adjusted.

When the vehicle is controlled to travel in a target mode, a priority order corresponding to the target driving mode is determined as a target priority order, and during vehicle traveling, based on the target priority order, a function corresponding to each functional module is executed.

The priority order is a ranking of importance of a plurality of functional modules of the vehicle, the functional modules are used for implementing functions related to vehicle traveling, and the importance is determined based on requirements of the driving condition.

When executing the functions corresponding to the functional modules based on the priority order, the function corresponding to the functional module ranked higher in the order is executed preferentially.

In this way, based on different requirements of actual operating conditions, the priority of each functional module may be adaptively adjusted, ensuring execution of high-priority functional modules, thereby satisfying requirements of different operating conditions.

Specifically, the functional modules include a lane keeping module, a collision avoidance module, an obstacle detection module, and a driver state assessment module.

In a priority order corresponding to the highway driving mode, priorities of the lane keeping module and the driver state assessment module are higher than those of other functional modules; in a priority order corresponding to the urban road driving mode, priority of the collision avoidance module is higher than those of other functional modules; and in a priority order corresponding to the construction site operating mode, priority of the obstacle detection module is higher than those of other functional modules.

Therefore, when determining the target priority order, if the target driving mode is the highway driving mode, the priority order corresponding to the highway driving mode is determined as the target priority order. In this case, in the target priority order, the priorities of the lane keeping module and the driver state assessment module are higher than those of other functional modules.

If the target driving mode is the urban road driving mode, the priority order corresponding to the urban road driving mode is determined as the target priority order. In this case, in the target priority order, the priority of the collision avoidance module is higher than those of other functional modules.

If the target driving mode is the construction site operating mode, the priority order corresponding to the construction site operating mode is determined as the target priority order. In this case, in the target priority order, the priority of the obstacle detection module is higher than those of other functional modules.

In this embodiment, when the vehicle is controlled to travel in the target driving mode, the ranking of importance of the various functional modules corresponding to the target driving mode, that is, the priority order, is determined as the target priority order, and based on the target priority order, the functions corresponding to each functional module are executed, thereby adaptively adjusting the priority of each functional module based on different actual driving conditions, ensuring execution of a high-priority functional module, and thereby satisfying requirements of different operating conditions.

When the target driving mode is the highway driving mode, the priority order corresponding to this mode is determined as the target priority order, so as to ensure that, under certain resource conditions, a lane keeping function and a driver state assessment function are executed preferentially, so that when the vehicle is traveling on a highway, it may effectively avoid occurrence of the vehicle deviating from a lane and ensure attention of a driver.

When the target driving mode is the urban road driving mode, the priority order corresponding to this mode is determined as the target priority order, so as to ensure that, under certain resource conditions, a collision avoidance function is executed preferentially, so that when the vehicle is driving on an urban road, it may effectively avoid collisions with obstacles such as pedestrians and vehicles.

When the target driving mode is the construction site operating mode, the priority order corresponding to this mode is determined as the target priority order, so as to ensure that, under certain resource conditions, an obstacle detection function is executed preferentially, so that when the vehicle is operating at a construction site, it may timely detect obstacles that may suddenly appear, ensuring safety of construction site operation.

The following describes the various modules related to autonomous driving functions mentioned above:

The lane keeping module performs lane keeping based on a lane algorithm using improved fuzzy control. In the algorithm, a yaw rate and a sideslip angle at a center of mass of the vehicle are monitored in real time, the yaw rate and the sideslip angle at the center of mass of the vehicle are taken as inputs, and a steering angle is dynamically adjusted by performing fuzzy inference and control rules. Implementation steps of the algorithm include: calculating the yaw rate and the sideslip angle at the center of mass of the vehicle at a current moment; comparing the yaw rate and the sideslip angle at the center of mass of the vehicle with expected values (or preset values) of the yaw rate and the sideslip angle at the center of mass to obtain error values; calculating a steering angle compensation amount according to the error values and a fuzzy control rule; and outputting the steering angle compensation amount to adjust a steering system of the vehicle, so as to achieve lane keeping.

The yaw rate describes a rate at which the vehicle rotates around its center of mass, and a calculation formula is r=ay/vx, where the ay represents a lateral acceleration of the vehicle, and the vx represents a longitudinal velocity of the vehicle.

The sideslip angle at the center of mass describes an angle between a velocity direction of the center of mass of the vehicle and a longitudinal axis of the vehicle. Since the sideslip angle at the center of mass is not easy to measure directly, it is usually obtained through an estimation algorithm.

Exemplarily, the estimation algorithm may be a dynamic-based method. Based on a dynamic model, the sideslip angle at the center of mass of the vehicle may be approximately calculated by a formula β=(lr/vx)*r-(m*lf/2L*Cαr)*ay. Among them, the β represents the sideslip angle at the center of mass of the vehicle, the lr represents a distance from the center of mass of the vehicle to a rear axle, the lf is a distance from the center of mass of the vehicle to a front axle, the vx represents a longitudinal velocity of the vehicle, the m is mass of the vehicle, the L is a wheelbase of the vehicle, L=lf+lr, the Cαr is cornering stiffness of rear wheels of the vehicle, and the ay represents a lateral acceleration of the vehicle.

In addition, preset expected values are determined based on a large number of experiments and simulations.

A basic form of the fuzzy control rule is "if... then...". In the lane keeping module, a specific fuzzy control rule may be expressed as: if the error value is e, then the steering angle compensation amount is determined as Δδsw.

The error value usually includes two main parts: one is a yaw rate error Δr, that is, a difference between an expected yaw rate (or an expected value of the yaw rate) and an actual yaw rate; and the other is the sideslip angle at the center of mass Δβ, that is, a difference between an expected sideslip angle at the center of mass (in other words, an expected value of the sideslip angle at the center of mass) and an actual sideslip angle at the center of mass.

The steering angle compensation amount is dynamically calculated based on the error values in combination with a fuzzy control system or the fuzzy control rules. In this process: firstly, fuzzification is performed to convert actually obtained error values Δr and Δβ into fuzzy sets, for example, classifying the error values into one of small (S), medium (M), and large (L); then, according to the fuzzy control rules, a fuzzy inference mechanism is used for determining the fuzzy set of the steering angle compensation amount; finally, defuzzification is performed on the fuzzy set to convert the fuzzy set into a specific steering angle compensation amount.

The steering angle compensation amount may be a fixed value, and there is a correspondence relationship between different fuzzy sets and different steering angle compensation amounts.

Exemplarily, taking the fuzzy sets of Δr and Δβ as small (S), medium (M), and large (L) respectively as an example, the fuzzy control rules may be expressed as: if Δβ is S and Δr is S, then Δδsw is S; if Δβ is S and Δr is M, then Δδsw is S; if Δβ is S and Δr is L, then Δδsw is M; if Δβ is M and Δr is S, then Δδsw is M; if Δβ is M and Δr is M, then Δδsw is M; if Δβ is M and Δr is L, then Δδsw is L; if Δβ is L and Δr is S, then Δδsw is M; if Δβ is L and Δr is M, then Δδsw is L; if Δβ is L and Δr is L, then Δδsw is L.

Exemplarily, actually obtained error values Δβ = 5° and Δr = 10° are subjected to fuzzification, and it is determined that Δβ = 5° is the medium error M and Δr = 10° is the large error L. Afterwards, according to the fuzzy control rules, if Δβ is M and Δr is L, then Δδsw is L, and by inference, it may be determined that Δδsw is L. Finally, the fuzzy set is converted into a specific steering compensation amount, where Δδsw being L means Δδsw is a large compensation amount, for example, 20°.

It may be understood that, since the yaw rate and the sideslip angle at the center of mass of the vehicle may reflect an actual trajectory of the vehicle, and the expected values of the yaw rate and the sideslip angle at the center of mass may reflect an expected trajectory of the vehicle, the steering angle of the vehicle is adjusted based on dynamic actual values and expected values of the yaw rate and the sideslip angle at the center of mass of the vehicle, in other words, the steering angle of the vehicle is dynamically adjusted based on a difference between the expected trajectory and the actual trajectory of the vehicle.

The obstacle detection module performs feature extraction on the multimodal fusion information, and through a trained convolutional neural network model, identifies pedestrians, vehicles and other obstacles around the vehicle in real time, and determines relative speed and distance of an obstacle.

The driver state assessment module is used for assessing a driver state and determining the driver state.

The collision avoidance module acquires the relative speed and distance of the obstacle from the obstacle detection module, calculates a collision risk based on the obtained relative speed and distance of the obstacle, and acquires the driving state of the driver from the driver state assessment module. After that, based on the collision risk and the driver state, a warning is given to avoid collision.

Specifically, driving safety is determined based on the collision risk and the driver state. When the driving safety is low, a warning is given to avoid collision; when the driving safety is high, no warning is given.

Among them, the collision risk may be low, medium, and high risk, and the driver state may be good driving state or poor driving state. The poor driving state means that the driver is driving fatigued, inattentive, and the like.

Specifically, if the collision risk is medium or high risk, or the driver state is poor driving state, it is determined that the driving safety is low, and a warning is given to the driver to avoid collision; and if the collision risk is low risk and the driver state is good driving state, it is determined that the driving safety is high, and no warning is given to the driver.

Among them, the functional modules related to autonomous driving also include a sensor perception module, which is used for sending the multimodal fusion information to corresponding driver state assessment module, obstacle detection module, and lane keeping module.

To better adapt to changes in the driving conditions of the vehicle and enable the vehicle to operate safely and efficiently in various operating conditions, in some embodiments, when the driving mode is adjusted, the parameter involved in the execution strategy of each module is adjusted.

When the vehicle is controlled to drive in the target driving mode, parameter configuration corresponding to the target driving mode is determined as a target parameter configuration, and when the vehicle is driving, functions corresponding to the respective functional modules are executed based on the target parameter configuration.

In other words, each driving mode has a correspondence relationship with parameter configuration of each module. Exemplarily, taking a case where the driving modes include a driving mode 1 and a driving mode 2, and modules related to autonomous driving include a first module and a second module, where the first module has a parameter item A and the second module has a parameter item B. In the driving mode 1, a corresponding parameter configuration of each module includes: a value of the parameter item A of the first module is a1, and a value of the parameter item B of the second module is b1; and in the driving mode 2, a corresponding parameter configuration of each module includes: the value of the parameter item A of the first module is a2, and the value of the parameter item B of the second module is b2.

Specifically, if the target driving mode is the highway driving mode, a first parameter is adjusted. The first parameter includes a lane departure threshold, a lane keeping detection frequency, and a driver state assessment frequency.

When the first parameter is adjusted, the first parameter is adjusted to a first target parameter value, that is, a value of the first parameter corresponding to the highway driving mode. Among them, the first parameter is a parameter whose value in the highway driving mode is different from those in other driving modes.

For the first parameter, a value of the lane departure threshold in other modes is greater than that in the highway driving mode, and values of the lane keeping detection frequency and the driver state assessment frequency in other modes are less than those in the highway driving mode.

In this way, in the highway driving mode, a stricter lane departure threshold, a shorter rapid response time, and higher lane keeping detection frequency and driver state assessment frequency are used compared to other modes, thereby better ensuring that the vehicle may maintain lane driving in the highway driving mode and avoiding a situation where the driver is inattentive.

If the target driving mode is the urban road driving mode, a second parameter is adjusted. The second parameter includes a collision avoidance detection frequency.

When the second parameter is adjusted, the second parameter is adjusted to a second target parameter value, that is, a value of the second parameter corresponding to the urban road driving mode. The second parameter is a parameter whose value in the urban road driving mode is different from those in other driving modes.

For the second parameter, the collision avoidance detection frequency in the urban road driving mode is greater than that in other driving modes.

In this way, since possibility of collision on other roads such as a highway or a construction site road is less than that on an urban road, in the urban road driving mode, by using a higher collision avoidance detection frequency than that in other driving modes, collision avoidance may be better achieved, thereby ensuring safety of the vehicle when driving in the urban road driving mode.

If the target driving mode is the construction site operating mode, a third parameter is adjusted. The third parameter includes an obstacle detection frequency.

When the third parameter is adjusted, the third parameter is adjusted to a third target parameter value, that is, a value of the third parameter corresponding to the construction site operating mode. The third parameter is a parameter whose value in the construction site driving mode is different from those in other driving modes.

For the third parameter, the obstacle detection frequency in the construction site operating mode is greater than that in other driving modes.

In this way, since a frequency of an obstacle appearing in other driving modes is generally lower than that in the construction site operating mode, in the construction site driving mode, by using a higher obstacle detection frequency than that in other driving modes, obstacles around the vehicle may be more comprehensively detected, thereby ensuring normal operation of the vehicle.

Therefore, in this embodiment, the parameter configuration corresponding to the target driving mode is determined as the target parameter configuration, and the corresponding first parameter, second parameter or third parameter is adjusted. When the vehicle is driving, the functions corresponding to the respective functional modules are executed based on the target parameter configuration, which may better adapt to changes in operating conditions. When the operating conditions change, the driving mode of the vehicle is adjusted in time, and the parameter configuration of each functional module in the vehicle is adjusted, thereby better adapting to changes in operating conditions to control the vehicle driving, enabling the vehicle to adapt to various complex operating conditions and ensuring safe and efficient operation of the vehicle.

In some embodiments, the first parameter, the second parameter, and the third parameter also include a vehicle driving speed.

In the highway driving mode, based on speed limit of the highway, the driving speed of the vehicle is controlled; in the urban road driving mode, based on speed limit of the urban road, a speed upper limit is reduced, and the driving speed of the vehicle is controlled to be less than the speed upper limit to prevent the vehicle from speeding; and in the construction site driving mode, based on speed limit of the construction site, the vehicle is controlled to drive at a low speed.

In this way, the vehicle may be better controlled to drive at a speed conforming to a corresponding operating condition, avoiding speeding or excessively low speed, thereby ensuring safe driving of the vehicle.

In some embodiments, when the vehicle is in different driving modes, a decision tree or a state machine may be used for managing switching between functions corresponding to the respective functional modules.

The decision tree selects an appropriate functional module and parameter configuration according to current perception data and the driving mode. The state machine switches to a corresponding state and executes a corresponding function according to a current vehicle state in combination with input events.

Exemplarily, when the vehicle is controlled to drive in the highway driving mode, the priorities of the lane keeping module and the driver state assessment module are set as a highest priority, and a stricter (smaller) lane departure threshold and rapid response time are used, increasing vehicle detection frequency and driver state assessment frequency. In this mode, the decision tree may be used for functional module switching, for example, selecting a current lane keeping strategy, in other words, switching a currently executed functional module to the lane keeping module.

When the vehicle is controlled to drive in the urban road driving mode, the priority of the collision avoidance module is set as a highest priority, and a higher collision avoidance detection frequency is used. In this mode, the decision tree is used for functional module switching, for example, selecting a collision avoidance protection strategy, in other words, switching a currently executed functional module to the collision avoidance module. In addition, on a basis of increasing the collision avoidance detection frequency, the speed upper limit of the vehicle may also be reduced to prevent the vehicle from speeding.

When the vehicle is controlled to drive in the construction site driving mode, the priority of obstacle detection is set as a highest priority, and a higher obstacle detection frequency is used. In this mode, for example, a state machine is used for functional module switching to activate detection function of a close-range obstacle. In addition, the speed upper limit of the vehicle is reduced, and the vehicle is switched to a low-speed driving state to activate a high priority of close-range obstacle detection.

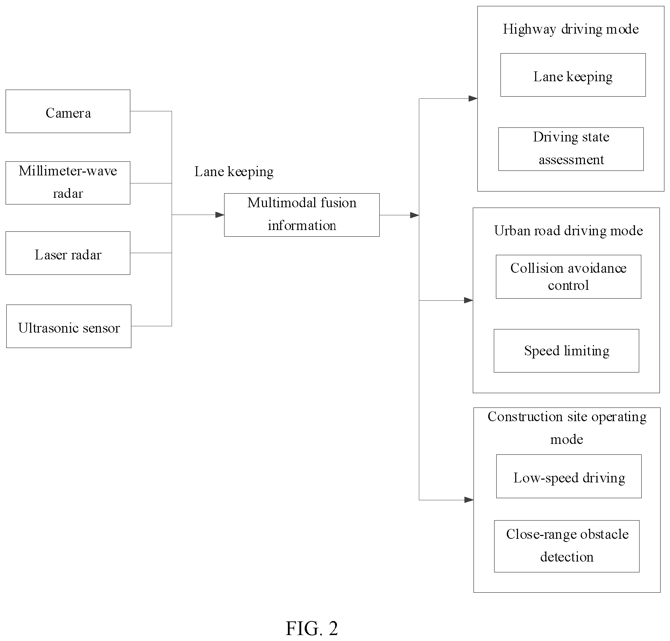

FIG. 2 is a schematic diagram of a vehicle control flow provided by an embodiment of the present application. In some embodiments, the vehicle control flow may be as shown in FIG. 2. Information collection is performed based on sensors such as a camera, a millimeter-wave radar, a lidar, and an ultrasonic sensor, and collected information is processed to achieve multimodal information fusion, thereby obtaining multimodal fusion information. The multimodal fusion information is passed through the operating condition classifier to determine the current driving operating condition. If the current driving operating condition is a highway driving operating condition, the vehicle is controlled to travel in the highway driving mode, in this case, priority is given to ensuring implementation of the lane keeping function and a driving state assessment function; if the current driving condition is the urban road driving condition, the vehicle is controlled to travel in the urban road driving mode, in which collision avoidance protection against obstacles such as a pedestrian and a vehicle is strengthened, and a vehicle speed is limited; and if the current driving condition is a construction site operating condition, the vehicle is controlled to travel in a construction site operating mode, and emphasis is placed on low-speed driving and close-range obstacle detection.

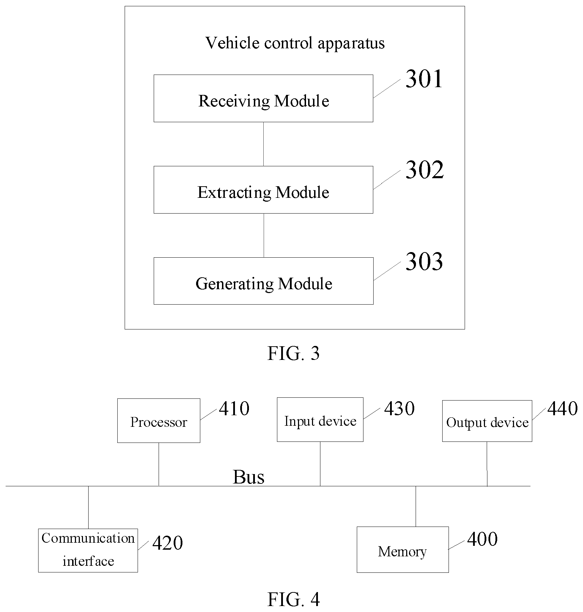

FIG. 3 is a schematic structural diagram of a control apparatus of a vehicle provided by an embodiment of the present application. As shown in FIG. 3, an embodiment of the present application also provides the control apparatus of the vehicle, including: an acquisition module 301, an acquisition module 302, and a control module 303.

Among them, the acquisition module 301 is configured to acquire, in real time, a driving state, environmental information, and a traffic condition of the vehicle;
a determination module 302 is configured to determine a current driving condition of the vehicle based on the driving state, the environmental information, and the traffic condition, where the current driving condition is a driving condition at a current moment; and
the control module 303 is configured to control the vehicle to travel in a target driving mode, where the target driving mode is a driving mode corresponding to the current driving condition.

The control apparatus of the vehicle provided in this embodiment belongs to a same inventive concept as the control method of the vehicle provided in the above embodiments of the present application, may execute methods provided in any of the above embodiments of the present application, and possesses corresponding functional modules and beneficial effects for executing the methods. For technical details not exhaustively described in this embodiment, reference may be made to specific processing content of the control method of the vehicle provided in the above embodiments of the present application, and details are not described herein.

Functions implemented by the acquisition module 301, the determination module 302, and the control module 303 described above may be implemented by same or different processors calling software, which is not limited in the embodiments of the present application.

FIG. 4 is a schematic structural diagram of an electronic device provided by an embodiment of the present application. With reference to FIG. 4, the electronic device includes: a memory 400 and a processor 410.

Among them, the memory 400 is connected to the processor 410, and is configured to store a program; and
the processor 410 is configured to implement the control method of the vehicle disclosed in any of the above embodiments by executing the program stored in the memory 400.

Specifically, the electronic device may also include: a bus, a communication interface 420, an input device 430, and an output device 440.

The processor 410, the memory 400, the communication interface 420, the input device 430, and the output device 440 are connected to each other via the bus.

Among them, the bus may include a path for transmitting information between various components of a computer system.

The processor 410 may be a general-purpose processor, such as a general-purpose central processing unit (CPU), a microprocessor, and the like, or may be an application-specific integrated circuit (ASIC), or one or more integrated circuits for controlling execution of programs in the solutions of the present application. The processor 410 may also be a digital signal processor (DSP), an application-specific integrated circuit (ASIC), a field-programmable gate array (FPGA) or other programmable logic devices, discrete gate or transistor logic devices, discrete hardware components.

The processor 410 may include a main processor, and may also include a baseband chip, a modem, and the like.

The memory 400 stores programs for executing the technical solutions of the present application, and may also store an operating system and other key services. Specifically, the programs may include program code, and the program code includes computer operation instructions. More specifically, the memory 400 may include read-only memory (ROM), other types of static storage devices that may store static information and instructions, random-access memory (RAM), other types of dynamic storage devices that may store information and instructions, magnetic disk storage, flash memory, and the like.

The input device 430 may include devices that receive data and information input by a user, such as a keyboard, a mouse, a camera, a scanner, a light pen, a voice input device, a touch screen, a pedometer, or a gravity sensor, or the like.

The output device 440 may include devices that allow information to be output to a user, such as a display screen, a printer, a speaker, or the like.

The communication interface 420 may include apparatus using any transceiver-type device to communicate with other devices or communication networks, such as Ethernet, radio access network (RAN), wireless local area network (WLAN), and the like.

The processor 410 executes the programs stored in the memory 400 and invokes other devices, which may be used for implementing various steps of any control method of the vehicle provided in the above embodiments of the present application.

Those skilled in the art may understand that a structure illustrated in FIG. 4 is merely a block diagram of a portion of the structure related to the solutions of the present application, and does not constitute a limitation on the electronic device to which the solutions of the present application are applied. A specific electronic device may include more or fewer components than those shown in the figure, or combine certain components, or have a different arrangement of components.

The embodiments of the present application also provide a chip, the chip includes a processor and a data interface, where the processor reads and runs programs stored in a memory through the data interface to execute the control method of the vehicle described in any of the above embodiments. A specific processing process and beneficial effects thereof may be referred to description of the embodiments of the above control method of the vehicle.

The embodiments of the present application also provide an engineering vehicle, the vehicle is provided with the above control apparatus of the vehicle, or the above electronic device.

In addition to the above method and device, the embodiments of the present application provide a computer program product, which includes computer program instructions, when the computer program instructions are executed by the processor, cause the processor to perform steps of the control method of the vehicle according to various embodiments of the present application described in the above "Exemplary Method" portion of this specification.

The computer program product may be written in any combination of one or more programming languages for writing program code for executing operations of the embodiments of the present application, the programming languages includes object-oriented programming languages such as Java, C++, and the like, and also includes conventional procedural programming languages, such as "C" language or similar programming languages. The program code may be executed entirely on a computing device of the user, partly on a device of the user, as a standalone software package, partly on the computing device of the user and partly on a remote computing device, or entirely on a remote computing device or server.

Furthermore, the embodiments of the present application also provide a storage medium, on which a computer program is stored, and when the computer program is executed by a processor, the steps of the control method of the vehicle according to various embodiments of the present application described in the above "Exemplary Method" portion of this specification are performed.

The processor-readable storage medium may be any available medium or data storage device that may be accessed by the processor, including but not limited to magnetic storage (such as floppy disks, hard disks, magnetic tapes, magneto-optical disks (MO), and the like), optical storage (such as CD, DVD, BD, HVD, and the like), and semiconductor memory (such as ROM, EPROM, EEPROM, non-volatile memory (NAND FLASH), solid state drives (SSD)), and the like.

Basic principles of the present application are described above in conjunction with specific embodiments. However, it should be noted that advantages, merits, effects, and the like, mentioned in the present application are merely exemplary and not restrictive, and these advantages, merits, effects, and the like, should not be considered as necessary for each embodiment of the present application. In addition, specific details disclosed above are merely for a purpose of illustration and ease of understanding, and not for limitation, and the above details do not limit the present application to being implemented necessarily with the above specific details. The block diagrams of devices, apparatuses, equipment, and systems involved in the present application are merely illustrative examples and are not intended to require or imply that they must be connected, arranged, or configured in the manner shown in the block diagrams. As those skilled in the art will recognize, these devices, apparatuses, equipment, and systems may be connected, arranged, and configured in any manner. Words such as "include", "comprise", "have", and the like, are open-ended terms meaning "including but not limited to" and are interchangeable. The words "or" and "and" used herein refer to the words "and/or" and are interchangeable, unless the context clearly indicates otherwise. The word "such as" used herein refers to the phrase "such as but not limited to" and is interchangeable.

It also needs to be pointed out that in the apparatus, devices, and methods of the present application, various components or steps may be decomposed and/or recombined. Such decomposition and/or recombination should be regarded as equivalent solutions of the present application.

The above description of the disclosed aspects is provided to enable any person skilled in the art to make or use the present application. Various modifications to these aspects will be very obvious to those skilled in the art, and the general principles defined herein may be applied to other aspects without departing from the scope of the present application. Therefore, the present application is not intended to be limited to the aspects shown herein, but according to the broadest scope consistent with the principles and novel features disclosed herein.

It should be understood that the defining terms "first", "second", "third", "fourth", "fifth", and "sixth" used in the description of the embodiments of the present application are only for more clearly describing the technical solutions, and cannot be used for limiting the protection scope of the present application.

The above description has been given for the purposes of illustration and description. Moreover, this description is not intended to limit the embodiments of the present application to the form disclosed herein. Although a number of example aspects and embodiments have been discussed above, those skilled in the art will recognize certain variations, modifications, changes, additions, and sub-combinations thereof.

Those skilled in the art should understand that the embodiments of the present application may be provided as a method, a system, or a computer program product. Therefore, the present application may adopt the form of an entirely hardware embodiment, an entirely software embodiment, or an embodiment combining software and hardware aspects. Moreover, the present application may adopt the form of a computer program product implemented on one or more computer-usable storage media (including but not limited to magnetic disk storage and optical storage, and the like) containing computer-usable program code.

The present application is described with reference to flowcharts and/or block diagrams of the methods, devices (systems), and computer program products according to the embodiments of the present application. It should be understood that each process and/or block in the flowcharts and/or block diagrams, and combinations of processes and/or blocks in the flowcharts and/or block diagrams can be implemented by computer-executable instructions. These computer-executable instructions can be provided to a processor of a general-purpose computer, a special-purpose computer, an embedded processor, or other programmable data processing devices to produce a machine, such that the instructions executed by the processor of the computer or other programmable data processing devices generate means for implementing the functions specified in one process or multiple processes in the flowchart and/or one block or multiple blocks in the block diagram.

These processor-executable instructions may also be stored in a processor-readable memory that can direct a computer or other programmable data processing devices to work in a specific manner, so that the instructions stored in the processor-readable memory produce an article of manufacture including instruction means that implement the functions specified in one process or multiple processes in the flowchart and/or one block or multiple blocks in the block diagram.

These processor-executable instructions can also be loaded onto a computer or other programmable data processing devices, so that a series of operational steps are executed on the computer or other programmable devices to produce computer-implemented processing, and thus the instructions executed on the computer or other programmable devices provide steps for implementing the functions specified in one process or multiple processes in the flowchart and/or one block or multiple blocks in the block diagram.

Obviously, those skilled in the art may make various changes and modifications to the present application without departing from the spirit and scope of the present application. In this way, if these modifications and variations of the present application fall within the scope of the claims of the present application and their equivalent technologies, the present application is also intended to include these changes and variations.

## Claims

1. A control method of a vehicle, **characterized by**, comprising:
acquiring, in real time, a driving state, environmental information, and a traffic condition of the vehicle;
determining a current driving condition of the vehicle based on the driving state, the environmental information, and the traffic condition, wherein the current driving condition is a driving condition at a current moment; and
controlling the vehicle to travel in a target driving mode, wherein the target driving mode is a driving mode corresponding to the current driving condition.

2. The control method of the vehicle according to claim 1, wherein,
the driving condition comprises a highway driving condition, an urban road driving condition, and a construction site operating condition; and
the driving mode comprises a highway driving mode, an urban road driving mode, and a construction site operating mode.

3. The control method of the vehicle according to claim 1 or 2, wherein the controlling the vehicle to travel in the target driving mode comprises:
judging whether the current driving condition changes relative to a historical driving condition, wherein the historical driving condition is a driving condition of the vehicle at a previous moment immediately preceding the current moment; and
if yes, switching a driving mode of the vehicle to the target driving mode, and controlling the vehicle to travel in the target driving mode.

4. The control method of the vehicle according to any one of claims 1 to 3, wherein the controlling the vehicle to travel in the target driving mode comprises:
determining a priority order corresponding to the target driving mode as a target priority order, wherein the priority order is a ranking of importance of a plurality of functional modules of the vehicle, each functional module is configured to implement function related to vehicle traveling, and the importance is determined based on a requirement of the driving condition; and
executing functions corresponding to the plurality of functional modules based on the target priority order when the vehicle is traveling.

5. The control method of the vehicle according to any one of claims 1 to 4, wherein the functional module comprises a lane keeping module, a collision avoidance module, an obstacle detection module, and a driver state assessment module, and the determining the priority order corresponding to the target driving mode as the target priority order comprises:
determining a priority order corresponding to the highway driving mode as the target priority order if the target driving mode is the highway driving mode, wherein in the target priority order, priorities of the lane keeping module and the driver state assessment module are higher than priorities of the other functional modules;
determining a priority order corresponding to the urban road driving mode as the target priority order if the target driving mode is the urban road driving mode, wherein in the target priority order, a priority of the collision avoidance module is higher than priorities of the other functional modules; and
determining a priority order corresponding to the construction site operating mode as the target priority order if the target driving mode is the construction site operating mode, wherein in the target priority order, a priority of the obstacle detection module is higher than priorities of the other functional modules.

6. The control method of the vehicle according to any one of claims 1 to 5, wherein the controlling the vehicle to travel in the target driving mode comprises:
determining a parameter configuration corresponding to the target driving mode as a target parameter configuration, wherein the parameter configuration is values of a plurality of parameters involved in each functional module of the vehicle; and
executing the functions corresponding to the plurality of functional modules based on the target parameter configuration when the vehicle is traveling.

7. The control method of the vehicle according to any one of claims 1 to 6, wherein the determining the parameter configuration corresponding to the target driving mode as the target parameter configuration comprises:
adjusting a first parameter if the target driving mode is the highway driving mode, the first parameter comprising a lane departure threshold, a lane keeping detection frequency, and a driver state assessment frequency;
adjusting a second parameter if the target driving mode is the urban road driving mode, the second parameter comprising a collision avoidance detection frequency; and
adjusting a third parameter if the target driving mode is the construction site operating mode, the third parameter comprising an obstacle detection frequency.

8. A control apparatus of a vehicle, **characterized by**, comprising:
an acquisition module, configured to acquire, in real time, a driving state, environmental information, and a traffic condition of the vehicle;
a determination module, configured to determine a current driving condition of the vehicle based on the driving state, the environmental information, and the traffic condition, wherein the current driving condition is a driving condition at a current moment; and
a control module, configured to control the vehicle to travel in a target driving mode, wherein the target driving mode is a driving mode corresponding to the current driving condition.

9. An electronic device, **characterized by** comprising a memory and a processor,
wherein the memory is connected to the processor and is configured to store a program; and
the processor is configured to implement the control method of the vehicle according to any one of claims 1 to 7 by executing the program stored in the memory.

10. An engineering vehicle, **characterized in that** the engineering vehicle is provided with the control apparatus of the vehicle according to claim 8, or the electronic device according to claim 9.

11. A computer-readable storage medium storing a computer program, **characterized in that** when the computer program is executed by a processor, the control method of the vehicle according to any one of claims 1 to 7 is implemented.

12. A computer program product, comprising a computer program, **characterized in that** when the computer program is executed by a processor, the control method of the vehicle according to any one of claims 1 to 7 is implemented.

13. A computer program, **characterized in that** when the computer program is executed by a processor, the control method of the vehicle according to any one of claims 1 to 7 is implemented.
